# EUROPÄISCHE PATENTANMELDUNG

(11) **EP 2 433 833 A2**
(43) Veröffentlichungstag der Anmeldung: **28.03.2012**
(21) Anmeldenummer: 11006595.0
(22) Anmeldetag: 11.08.2011
(51) Int. Cl.: B60N 2/30, B60N 2/58, B60N 2/68, B60R 5/00

(54) **Sitz oder Sitzanlage für ein Kraftfahrzeug und insbesondere einen Lieferwagen**

(30) Priorität: 27.09.2010 DE 102010046562
(71) Anmelder: Magna Seating (Germany) GmbH, 63877 Sailauf (DE)
(72) Erfinder: Ng, Lip Min, 51381 Leverkusen (DE)
(74) Vertreter: Völger, Silke Beatrix

(57) **Zusammenfassung**

Ein Sitz (1) oder Sitzanlage (1a, 1b, 1c, 1d, 1e) für ein Kraftfahrzeug und insbesondere einen Lieferwagen, aufweisend eine fahrzeugfest anzubringende Tragstruktur (3), ein damit verbundenes Sitzpolsterteil (2a, 5a; 2b, 5b) und eine Trennwandeinrichtung (14), die verstellbar ist zwischen einer Gebrauchseinstellung, in der sie den Fußbereich (F) vor dem Sitz (1) von einem darunter vorhandenen Ladebereich (L) trennt, und einer Verstaueinstellung, in der ein Durchlass zwischen beiden Bereichen (F, L) frei bleibt, soll derart weitergebildet werden, dass ein möglichst einfaches und sicheres Verstauen von langen, insbesondere rechteckigen Gegenständen unter sicherheitsrelevanten Aspekten für die Fahrzeuginsassen möglich ist. Dies wird dadurch erreicht, das Sicherungseinrichtungen ein Verbringen der Trennwandeinrichtung (14) in die Verstaueinstellung mit einem Aufrichten des Sitzpolsterteils (2a, 5a; 2b, 5b) an der Vorderkante und/oder einem Verschwenken der Rückenlehne in Richtung auf das Sitzpolsterteil und/oder einem Herausnehmen des Sitzpolsterteils aus der Tragstruktur (3) notwendig verbinden, um dadurch den typischen Gebrauch des Sitzes (1) wesentlich zu beeinträchtigen oder unmöglich zu machen.

## Beschreibung

Die Erfindung betrifft einen Sitz oder Sitzanlage für ein Kraftfahrzeug und insbesondere einen Lieferwagen.

In Kombinations-Kraftfahrzeugen, Kleinbussen oder Kastenwagen ist die zweite Sitzreihe häufig zusammenlegbar ausgestaltet. Dadurch wird eine einfache Vergrößerung des Gepäckraums ohne Ausbau der Sitzreihe möglich. Eine derartige Sitzanordnung zeigt beispielsweise die Druckschrift US 2002 / 0027383 A1. In der Regel wird beim Zusammenlegen der Sitzreihe die Rückenlehne über die Sitzfläche abgelegt und der gesamte Sitz anschließend über eine Schwenkachse im vorderen Bereich der Sitzbasis nach vorne aufgestellt. Zur sicheren Nutzung dieses Gepäckraums ist es erforderlich, die Sitze der ersten Sitzreihe durch eine zusätzliche Gepäckraumabtrennung gegen umher geschleudertes Ladegut zu schützen.

Aus der DE 10 2005 002 916 A1 ist eine Sitzanordnung bekannt, bei der der Fahrzeugsitz über seine Bodenabstützung längs des Fahrzeugbodens verschiebbar und in beliebigen Positionen arretierbar gehalten ist. Der Sitz ist aus einer Gebrauchsposition in eine Ablageposition verlagerbar, in der die Rückenlehne und die Sitzfläche eine gemeinsame senkrechte Ebene bilden. Die Ausbildung einer derartigen vertikalen Fahrzeugraumtrennung benötigt wenig Platz in der Fahrzeuglängsrichtung, allerdings ist eine freie Sicht nach hinten durch die Heckscheibe nicht mehr möglich.

Zum Transport von langen, schmalen Gegenständen beispielsweise Skiern ist es weiterhin bekannt eine Durchladeöffnung in einer Trennwand zwischen dem Kofferraum und dem Innenraum des Kraftfahrzeugs anzuordnen. Die zu verstauenden Skier können dann aus dem Kofferraum in den Innenraum des Kraftfahrzeugs durchgesteckt und transportiert werden. An der Durchladeöffnung der Trennwand ist hierfür ein Halterahmen angeordnet, in dem eine Durchladeklappe verschwenkbar gelagert ist. Wie zuvor erwähnt, ermöglicht diese Durchladeöffnung ein Verstauen von relativ schmalen, langen Gegenständen. Längere Gegenstände, die eine gewisse Breite aufweisen, können auf diese einfache Weise durch eine Durchladeöffnung nicht mehr zum Transport verstaut werden.

Aufgabe der Erfindung ist es daher, einen Sitz oder eine Sitzanlage für ein Kraftfahrzeug derart weiterzubilden, dass ein möglichst einfaches und sicheres Verstauen von langen, insbesondere rechteckigen Gegenständen unter sicherheitsrelevanten Aspekten für die Fahrzeuginsassen möglich ist.

Diese Aufgabe wird durch die im Patentanspruch 1 angegebenen Merkmale gelöst.

Weitere vorteilhafte Ausgestaltungen und Weiterbildungen des erfindungsgemäßen Sitzes oder der Sitzanlage ergeben sich aus den Unteransprüchen.

Bevorzugte Ausführungsformen des Sitzes oder der Sitzanlage werden nachfolgend beispielshalber beschrieben, wobei veranschaulichend auf die beigefügten Zeichnungen Bezug genommen wird.

Es zeigen:
- Fig. 1: eine perspektivische schematische Ansicht einer Sitzanlage mit zwei Sitzen ohne Sitzpolster in der Verstaueinstellung;
- Fig. 2: eine perspektivische schematische Ansicht der Sitzanlage gemäß Fig. 1 in der norma-len Gebrauchseinstellung;
- Fig. 3: einen vergrößerten Ausschnitt der Sitzanlage gemäß der Fig. 1 in einer Seitenansicht;
- Fig. 4: einen vergrößerten Ausschnitt der Sitzanlage gemäß der Fig. 1 in Seitenansicht in der Verstaueinstellung,
- Fig. 5: eine perspektivische schematische Ansicht einer zweiten Ausführungsvarianten einer Sitzanlage mit zwei Sitzen mit Sitzpolster in der Gebrauchseinstellung,
- Fig. 6: eine perspektivische schematische Ansicht der Sitzanlage gemäß Fig. 5 in der Verstaueinstellung,
- Fig. 7: eine perspektivische schematische Ansicht der Sitzanlage gemäß Fig. 5 in einer wei-teren Verstaueinstellung,
- Fig. 8: eine perspektivische schematische Ansicht einer dritten Ausführungsvarianten einer Sitzanlage mit zwei Sitzen mit Sitzpolster in der Gebrauchseinstellung,
- Fig. 9: eine perspektivische schematische Ansicht der Sitzanlage gemäß Fig. 8 in der Verstaueinstellung,
- Fig. 10: eine perspektivische schematische Ansicht der Sitzanlage gemäß Fig. 8 in einer wei-teren Verstaueinstellung,
- Fig. 11: eine perspektivische schematische Ansicht einer vierten Ausführungsvarianten einer Sitzanlage mit zwei Sitzen mit Sitzpolster in der Gebrauchseinstellung,

- Fig. 12: eine perspektivische schematische Ansicht der Sitzanlage gemäß Fig. 11 in der Verstaueinstellung,
- Fig. 13: eine perspektivische schematische Ansicht der Sitzanlage gemäß Fig. 11 in einer weiteren Verstaueinstellung,
- Fig. 14: eine perspektivische schematische Ansicht einer fünften Ausführungsvarianten einer Sitzanlage mit zwei Sitzen mit Sitzpolster in der Gebrauchseinstellung,
- Fig. 15: eine perspektivische schematische Ansicht der Sitzanlage gemäß Fig. 14 in der Verstaueinstellung,
- Fig. 16: eine perspektivische schematische Ansicht der Sitzanlage gemäß Fig. 14 in einer weiteren Verstaueinstellung,
- Fig. 17: eine perspektivische schematische Ansicht einer sechsten Ausführungsvarianten ei-ner Sitzanlage mit zwei Sitzen mit Sitzpolster in der Gebrauchseinstellung,
- Fig. 18: eine perspektivische schematische Ansicht der Sitzanlage gemäß Fig. 17 in der Verstaueinstellung,
- Fig. 19: eine perspektivische schematische Ansicht der Sitzanlage gemäß Fig. 17 in einer weiteren Verstaueinstellung,
- Fig. 20: einen vergrößerten Ausschnitt der Sitzanlage gemäß der Fig. 19 in einer Seitenan-sicht auf den Sitzbereich mit der klappbaren Rückenlehne in der Gebrauchseinstel-lung,
- Fig. 21: einen vergrößerten Ausschnitt der Sitzanlage gemäß der Fig. 20 in Seitenansicht in einer Einstellung mit vorgeklappter Rückenlehne,
- Fig. 22: einen vergrößerten Ausschnitt der Sitzanlage gemäß der Fig. 20 in Seitenansicht in Verstaueinstellung,

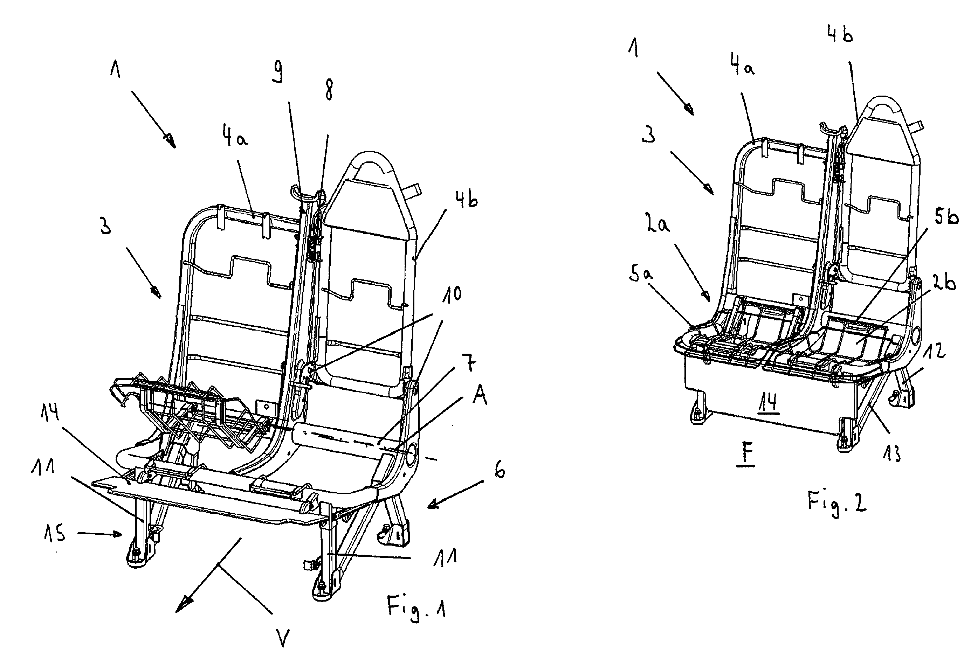

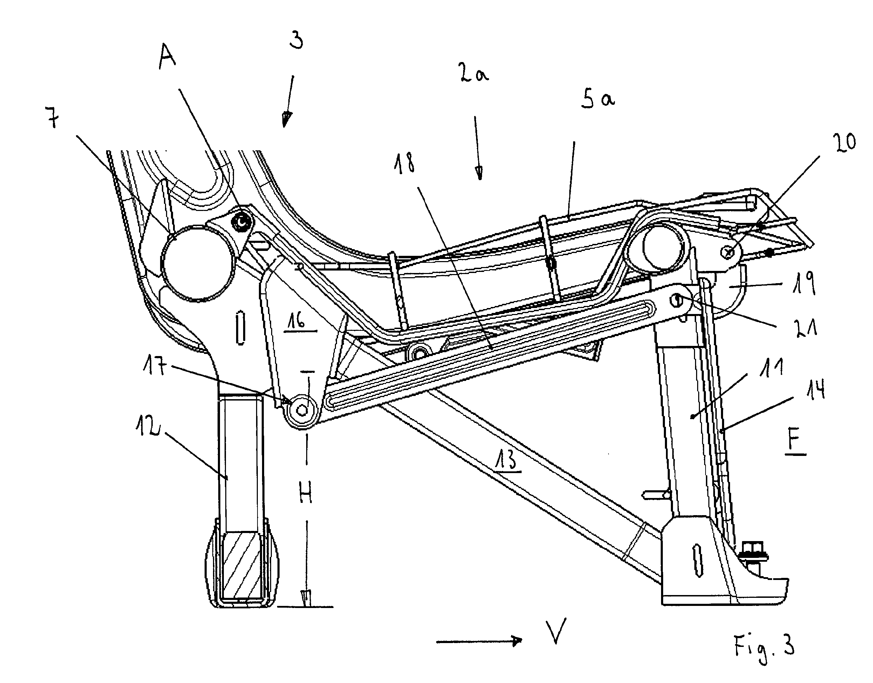

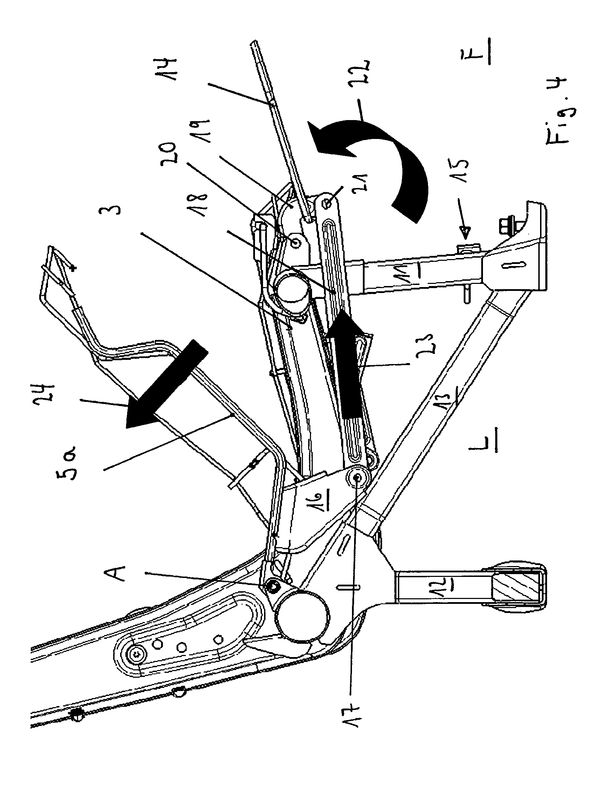

Figur 1 zeigt die Sitzanlage in Verstaueinstellung, in der es möglich ist längere Gegenstände unter der Sitzanlage zu verstauen und diese nach vorne in den Fußbereich durchschieben zu können (dargestellt durch Pfeil V). Dies wird durch ein Verschwenken einer Trennwandeinrichtung um die Achse A an einer ersten Tragstruktur der Sitzanlage 1 ermöglicht. Zur Vermeidung von Verletzungen von Fahrzeuginsassen, ist das Verschwenken der Trennwandeinrichtung mit einem Hochklappen des Sitzpolsterteils bzw. Herausnehmen des Sitzpolsterteils gekoppelt. Nähere Einzelheiten zu einer Ausführungsform einer derartigen Kopplung sind aus den Figuren 3 und 4 ersichtlich.

Die Fig. 1 und 2 zeigen eine Sitzanlage 1 einer hinteren Sitzreihe mit zwei Sitzbereichen 2a, 2b in verschiedenen Einstellungen. Die Sitzanlage 1 umfasst eine erste Tragstruktur 3 mit daran angeordneten Rückenlehnen 4a, 4b, zwei Sitzbereiche 2a, 2b mit jeweils einem Sitzpolster (nicht dargestellt) und einer zugeordneten zweiten Tragstruktur 5a, 5b. Sitzpolster und zugeordnete zweite Tragstruktur bilden dabei ein sogenanntes Sitzpolsterteil. Des Weiteren umfasst die Sitzanlage eine Bodenabstützung mit einer Stützstruktur 6.

Die den Sitzbereichen 2a, 2b zugeordneten Tragstrukturen 5a, 5b erstrecken sich im Wesentlichen unterhalb der Sitzpolster und verleiht diesen die für den Gebrauch erforderliche Stabilität. Die Tragstrukturen 5a, 5b sind dabei als Rahmenprofil mit Gitterverstrebung ausgeführt und weisen eine schalenförmige Ausführung auf. Jeder Sitzbereich 2a, 2b ist gemäß dieser Ausführung mit einer separaten Tragstruktur 5a, 5b ausgestattet. Die erste Tragstruktur 3 weist im Wesentlichen eine Rahmenstruktur auf und dient sowohl der Lagerung und Abstützung der Sitzpolster samt deren Tragstrukturen 5a, 5b (Sitzpolsterteile) und bildet die Rückenlehnenstruktur, um die Rückenlehnenpolster zu tragen und mechanisch zu versteifen. Hierfür weist die erste Tragstruktur 3 einen den Rückenlehnen zugeordneten als Rahmenprofil ausgebildeten Bereich und einen dem Sitzbereich zugeordneten als Rahmenprofil ausgebildeten Bereich auf. Die zweiten Tragstrukturen 5a, 5b mit den Sitzpolstern sind im unteren Rückenlehnenbereich an der ersten Tragstruktur 3 insbesondere an einer dort angeordneten Querverstrebung 7 jeweils vereinzelt verschwenkbar um eine Achse A angeschlagen. Die erste Tragstruktur 3 ist im Rückenlehnenbereich ebenfalls zweigeteilt ausgeführt und umfasst eine feststehende Rückenlehnenstruktur 4a mit zugeordnetem nicht dargestelltem Polster sowie eine verschwenkbar an der Tragstruktur angeschlagene bewegliche Rückenlehnenstruktur 4b. Die verschwenkbar angeschlagene Rückenlehnenstruktur 4b ist über zugeordnete Arretier- und Betätigungsmittel 8 im oberen Bereich der Tragstruktur 3 an einer Mittelverstrebung 9 festgelegt. Im unteren Seitenbereich der ersten Tragstruktur 3 sind jeweils beidseits Gelenke 10 zur verschwenkbaren Lagerung der Rückenlehnenstruktur 4b angeordnet. Durch die gelenkige Anbindung kann die Rückenlehnenstruktur bzw. Rückenlehne 4b in eine in etwa waagrechte Position nach vorne auf den Sitzbereich 2b verschwenkt und somit als Tisch genutzt werden. Die Rückenlehne befindet sich dann in einer sogenannten Tischposition. Die Sitzanlage 1 ist des Weiteren über eine an der ersten Tragstruktur 3 befestigte Stützstruktur 6 mit dem Fahrzeugboden verbunden und dort über geeignete Verbindungsmittel festgelegt. Die Stützstruktur 6 weist im Wesentlichen zwei in Querrichtung beabstandet angeordnete, parallel zueinander verlaufender vordere Stützstreben 11 und zwei in Querrichtung beabstandet angeordneter hintere Stützstreben 12 auf. Ausgehend von der dem Fahrzeugboden zugewandten Endbereich der vorderen Stützstreben 11, ist jeweils eine Diagonalstrebe 13 vorgesehen. Diese verläuft von dem vorderen unteren Bereich der vorderen Stützstreben 11 nach hinten an den oberen Anbindungsbereich der hinteren Stützstreben 12 mit der ersten Tragstruktur 3. Durch die Anordnung der Stützstruktur befindet sich unter den Sitzbereichen ein Ladebereich, der ungefähr die Höhe H aufweist.

Nachfolgend werden detailliert die Sicherungseinrichtungen erörtert, die ein Verbringen der Trennwandeinrichtung in die Verstaueinstellung mit einem Aufrichten des Sitzpolsterteils an der Vorderkante notwendig verbinden. Aus der Darstellung kann man weiterhin ersehen, dass an der Querverstrebung der Vorderkante der Tragstruktur 3 eine rechteckige Trennwandeinrichtung 14 verschwenkbar festgelegt ist. In der in Figur 2 gezeigten Gebrauchseinstellung ist diese als Klappe ausgeführte Trennwandeinrichtung 14 ausgehend von der vorderen Querverstrebung im Wesentlichen senkrecht zum Fahrzeugboden verlaufend ausgerichtet und trennt den Fußbereich F vor der Sitzanlage 1 zu dem Ladebereich L unter der Sitzanlage 1 ab. An den vorderen Stützstreben 11 sind jeweils Rast- oder Verriegelungsmittel 15 vorgesehen, die ein Abstützen und Verriegeln der Klappe 14 in der Gebrauchseinstellung gewährleisten. An der zur Außenseite der Sitzanlage 1 weisenden Seite der Tragstruktur 5a des Sitzpolsters ist ein Befestigungsflansch 16 vorgesehen, der eine drehbewegliche Anbindung 17 einer seitlich unter der Sitzanlage verlaufenden Zugstange 18 ermöglicht. Diese Zugstange 18 erstreckt sich im Wesentlichen bis zur Vorderkante der Sitzanlage 1 und ist dort drehbeweglich mit einem an der Vorderkante der ersten Tragstruktur 3 angeschlagenen bogenförmig ausgestalteten Hebelelement 19 verbunden. Das Hebelelement 19 ist ebenfalls verschwenkbar um eine Querachse 20 an der Tragstruktur 3 festgelegt. In etwa mittig zwischen den Anbindungspunkten 20, 21 des Hebelelementes19 ist die Klappe 14 befestigt. Figur 3 zeigt in der Seitenansicht die Gebrauchseinstellung mit geschlossener Trennwandeinrichtung 14. Bei einem Öffnen der Klappe gemäß des eingezeichneten Pfeils 22 nach oben, wird durch die zuvor beschriebene Kopplung der Zugstange 18 mit dem Hebelelement 19 und der weiteren Kopplung der Zugstange 18 mit der Tragstruktur 5a des Sitzpolsters, die Zugstange 18 in Richtung des Pfeils 23 nach vorne bewegt und ein Verschwenken des Sitzpolsters (Pfeil 24) mit Tragstruktur 5a um die Achse A bewirkt. Nicht dargestellt ist ein Ausrichtmittel, welches einerseits eine Verriegelungsmöglichkeit der hochgeschwenkten Trennwandeinrichtung in Verstaueinstellung bietet und andererseits die Bewegung der Trennwandeinrichtung in Bezug auf eine Übereinstimmung der Rast- oder Verriegelungsmittel mit den entsprechenden Anbindungsstelen an der Tragstruktur 3 erzielt. Das Ausrichtmittel ist beispielsweise als zwischen der Trennwandeinrichtung und der Tragstruktur 3 verlaufende gelenkig angeschlagene Stange ausgeführt.

In der Verstaueinstellung ist ein Gebrauch des Sitzes für einen Fahrzeuginsassen nicht möglich. Die Figur 1 zeigt eine Ausführungsvariante einer Verstaueinstellung mit sogenannter "misuse" Funktion. Hier ist zu erkennen, dass bei hochgeklappter Trennwandeinrichtung 14 das linke Sitzpolster um die Achse A verschwenkt ist. Das rechte Sitzpolster mit zugeordneter Tragstruktur 5b ist entnommen. Durch die Entnahme des Sitzpolsters ist auch auf der rechten Seite der Sitzanlage ein Gebrauch des Sitzes für einen Fahrzeuginsassen nicht möglich.

Grundsätzlich geht die Erfindung von dem Grundgedanken aus, eine weitere Möglichkeit einer Schaffung eines Stauraums für längere Gegenstände wie beispielsweise Leitern oder dergleichen zu schaffen. Hierfür werden der unter der Sitzfläche bzw. des Sitzbereichs der zweiten Sitzreihe vorhandene Raum (Laderaum L) und der vor dem entsprechenden Sitz bzw. der Sitzanlage vorhandene Fußbereich F als Staubereich nutzbar gemacht. Dies wird dadurch erreicht, dass die vor dem Sitz oder der Sitzanlage angeordnete Trennwandeinrichtung 14, die in der normalen Gebrauchseinstellung des Sitzes den Raum vor dem Fußbereich und den Raum unter dem Sitz abtrennt, nach oben verschwenkt wird. In dieser Verstaueinstellung ist ein Durchladen eines langen Gegenstandes unter dem Sitz ausgehend von dem Bodenbereich hinter dem Sitz nach vorne in den Fußbereich vor den entsprechenden Sitz möglich. Damit bei einem Verstauen eines langen Gegenstandes keine Verletzungsgefahr für einen Fahrzeuginsassen besteht, ist der erfindungsgemäße Sitz oder die Sitzanlage mit einer sogenannten "misuse" Funktion ausgestattet. Das bedeutet, das bevor ein Hochschwenken der Trennwandeinrichtung 14 von einem Fahrzeuginsassen erfolgen kann, der Gebrauch des Sitzes beeinträchtigt bzw. unmöglich gemacht werden soll. Dies kann auch gleichzeitig mit dem Hochschwenken der Trennwandeinrichtung erfolgen. Gleichermaßen ist es notwendig Sicherungseinrichtungen vorzusehen, die zuerst ein verschwenken der Trennwandeinrichtung wieder in die Gebrauchseinstellung ermöglichen und anschließend oder gleichzeitig die Sitze in ihre Gebrauchsposition verbracht werden können.

Nachfolgend werden hierzu anhand der beigefügten Figuren einige grundsätzliche Prinzipien beschrieben. Die nachfolgende Beschreibung bezieht sich jeweils auf eine Sitzanlage mit zwei in einer Tragstruktur nebeneinander angeordneter Sitze bzw. Sitzplätze. Der der Erfindung zugrundeliegende Gedanke lässt sich allerdings gleichfalls auf einen Einzelsitz oder eine Sitzanlage mit mehr als zwei Sitzbereichen anwenden.

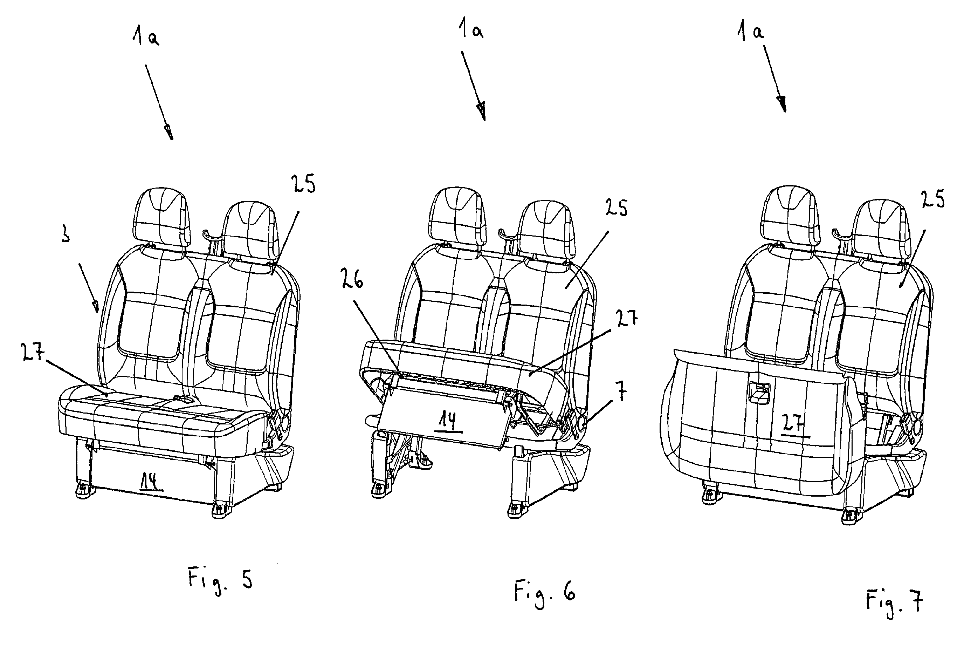

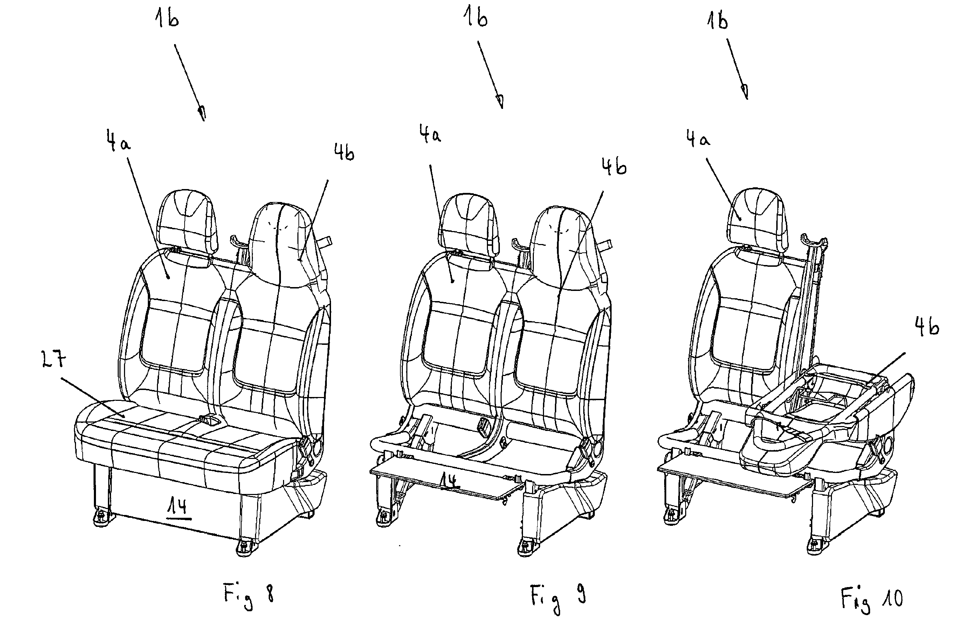

Die Figuren 5 bis 7 zeigen eine Sitzanlage 1a mit einer einteiligen nicht klappbaren Rückenlehnenstruktur mit Rückenlehnenpolster 25 und einem einteiligen an einer Tragstruktur 26 angeordneten Sitzpolsterteil 27. Das einteilige Sitzpolsterteil 27 ist dabei an einer hinteren Querstrebe 7 der Tragstruktur 3 verschwenkbar gelagert und kann in die in Figur 6 gezeigte Verstaueinstellung verschwenkt werden. In dieser Verstaueinstellung ist die Vorderkante des Sitzpolsterteils 27 in einer gegenüber der Gebrauchseinstellung befindlichen angehobenen Position. Nachfolgend wird eine weitere Ausführungsform von Sicherungseinrichtungen erörtert, die ein gekoppeltes Verschwenken des Sitzpolsterteils und der Laderaumabtrennung erzielen. Hierfür sind Befestigungsmittel vorgesehen, die die Laderaumabtrennung 14 an der Vorderkante des Sitzpolsterteils festlegen. Mit dem Verschwenken des Sitzpolsterteils 27 wird gleichzeitig die an der Vorderkante der des Sitzpolsterteils 27 festgelegte Trennwandeinrichtung 14 mit nach oben verschwenkt. Die Trennwandeinrichtung 14 ist als rechteckige Klappe ausgeführt, die in der Gebrauchseinstellung (Figur 5) den Fußbereich F vor dem Sitz bzw. der Sitzanlage 1a und den unter der Sitzanlage 1a vorhandenen Laderaum L trennt. Die Figur 7 zeigt eine weitere Möglichkeit zur Nutzung des Laderaums L unter dem Sitzpolsterteil 27. Hierfür ist die Verbindung des Sitzpolsterteils 27 zu der Tragstruktur 3 mehrgliedrig ausgeführt, um ein Aufschwenken des Sitzpolsterteils 27 um seine vordere Kante zu ermöglichen. Im Gegensatz zu der zuvor beschriebenen Ausführungsform ist die in den Figuren 8 bis 10 dargestellte Sitzanlage 1 b mit einer zweigeteilten Rückenlehnenstruktur 4a, 4b ausgestaltet. Dabei ist die auf den Zeichnungen abgebildete linke Seite der Rückenlehnenstruktur 4a als feststehende Rückenlehne ausgeführt und die rechte Seite als verschwenkbare Rückenlehnenstruktur 4b ausgebildet. Bei der in den Figuren 8 bis 10 gezeigten Ausführungsvariante kann die Trennwandeinrichtung 14 erst dann von einem Fahrzeuginsassen angehoben und nach oben verschwenkt werden, wenn das komplette einteilige Sitzpolsterteil 27 mit zugeordneter Tragstruktur 26 von der Sitzanlage 1 b entfernt wurde. Nach dem Entfernen des Sitzpolsterteils 27 kann die klappbare Rückenlehne 4b nach vorne in die Tischstellung verschwenkt werden. Ein Einsetzen des herausgenommenen Sitzpolsterteils 27 ist anschließend erst nach einem Herunterklappen und Verriegeln der Trennwandeinrichtung 14 möglich.

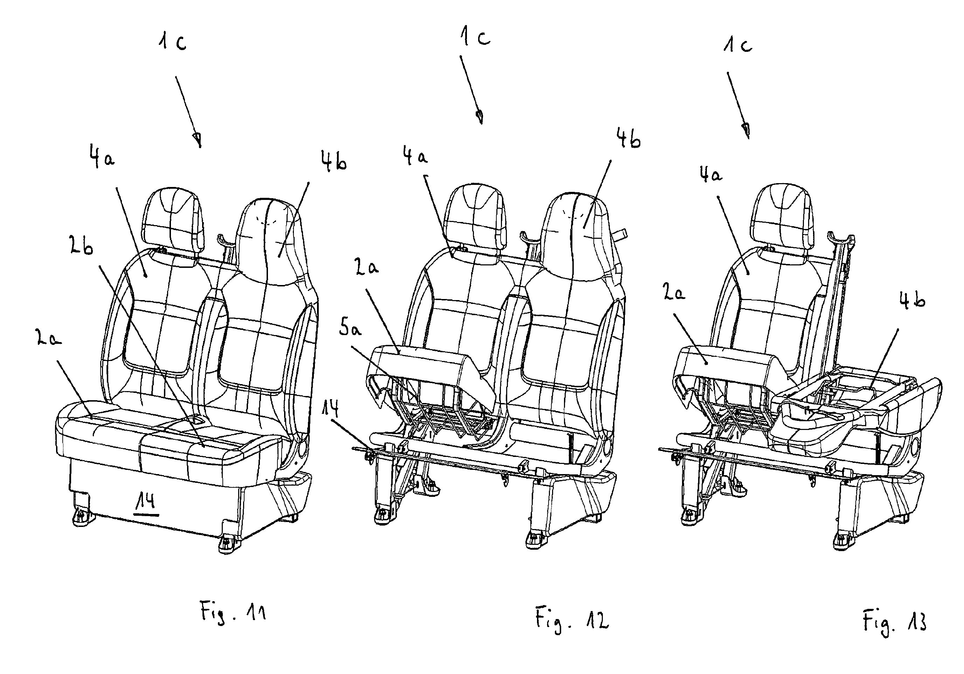

Bei einer weiteren in den Figuren 11 bis 13 dargestellten Ausführungsvarianten ist die Sitzanlage 1c mit einer zweiteiligen Rückenlehnenstruktur 4a, 4b und einem geteilten Sitzbereich 2a, 2b mit zugeordneten Tragstrukturen 5a, 5b ausgestaltet. Dies ermöglicht eine in den Figuren 12 und 13 dargestellte Verstaueinstellung. Ein Hochklappen der Trennwandeinrichtung 14 ist erst dann für einen Fahrzeuginsassen möglich, wenn der Sitzbereich 2a mit zugeordneter Tragstruktur 5a um die Achse A nach oben verschwenkt und wenn der Sitzbereich 2b mit zugeordneter Tragstruktur 5b aus der Sitzanlage 1c entfernt wurde. In der in Figur 13 gezeigten Verstaueinstellung ist die Rückenlehne 4b in eine horizontale Stellung nach vorne verschwenkt. In dieser Stellung kann die vorgeklappte Rückenlehne 4b als Tisch genutzt werden. Bei einem Hochklappen der Trennwand in die Verstaueinstellung wird gleichzeitig ein Verschwenken des Sitzpolsterteils um einen Winkel von ungefähr 7 Grad erreicht.

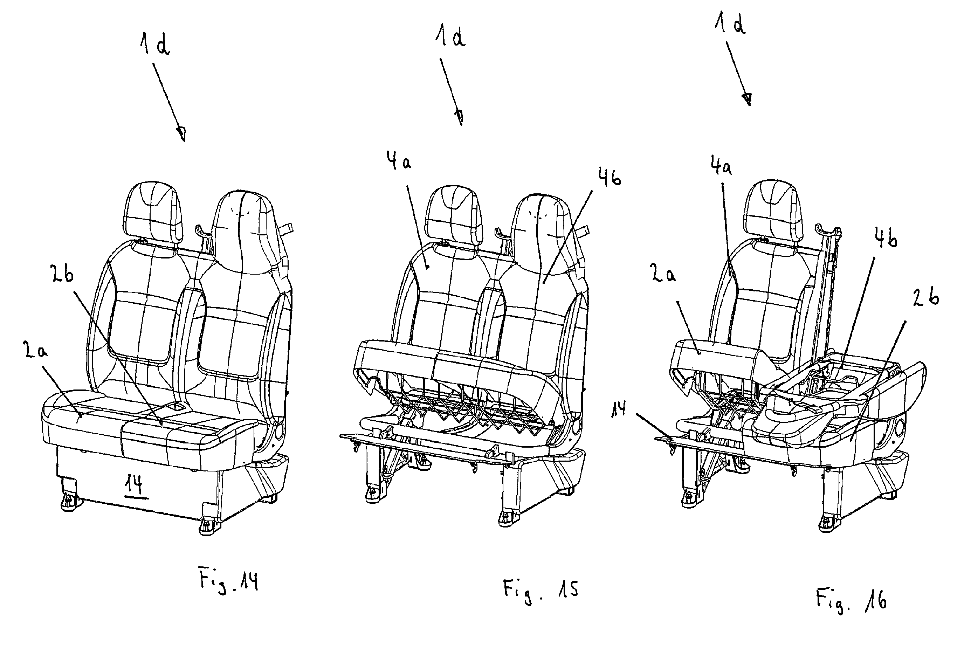

In der in den Figuren 14 bis 16 dargestellten Sitzanlage 1d kann die Trennwandeinrichtung 14 erst hochgeschwenkt werden, wenn beide Sitzbereiche mit zugeordneten Tragstrukturen um die Achse A nach oben verschwenkt sind. Die Verstaueinstellung ist in der Fig. 15 gezeigt. Bei einem Entriegeln der Rückenlehne 4b und Vorklappen derselben in eine waagrechte Position wird mit dem Vorklappen gleichzeitig ein Zurückschwenken des Sitzbereichs 4b bewirkt. Erst wenn die Trennwandeinrichtung 14 in die Gebrauchseinstellung zurückgeklappt und an der Stützstruktur verriegelt ist, können beide Sitzbereiche mit Tragstrukturen in die Gebrauchseinstellung zurück verlagert werden.

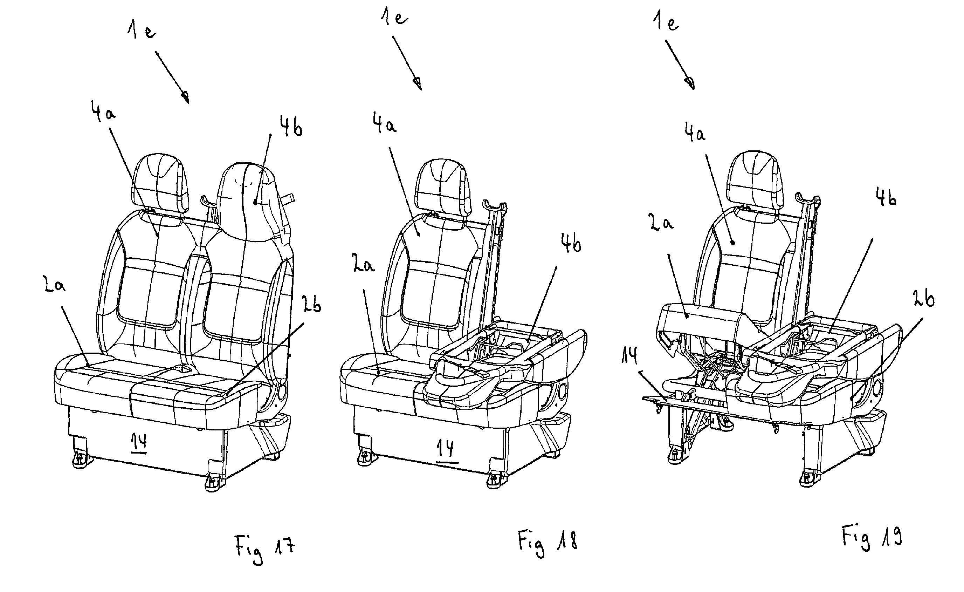

Eine bevorzugte Ausgestaltung des Erfindungsgedankens ist in den Figuren 17 bis 19 dargestellt. Bei dieser Sitzanlage 1 e ist ein Verschwenken der Trennwandeinrichtung 14 in die hochgeklappte Stellung möglich, wenn die Rückenlehne 4b nach vorne geklappt (Tischfunktion) und der Sitzbereich 4a mit zugeordneter Tragstruktur um die Achse A verschwenkt ist.

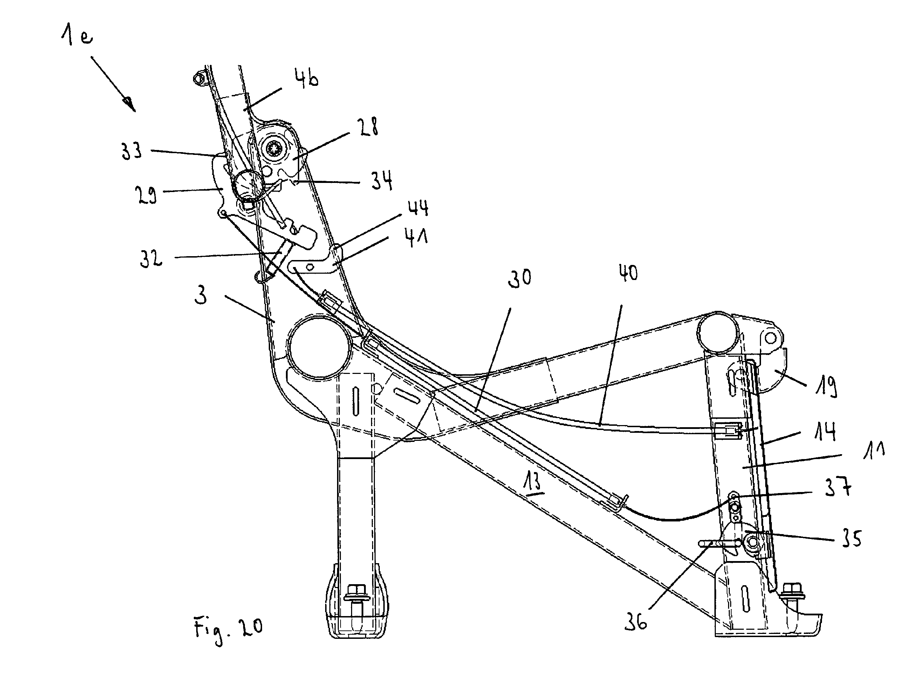

Die zu dieser Ausführungsform zugehörigen Sicherungseinrichtungen die im Wesentlichen eine Anzahl Verriegelungs-/Entriegelungselemente, Betätigungselemente und Hebelelemente umfassen, wird anhand der Figuren 20 bis 22 näher erläutert.

Wie bereits weiter obenstehend näher erläutert, ist die klappbare Rückenlehne im oberen Bereich vorzugsweise an der Mittelverstrebung über Arretiermittel verriegelt. Nach einer Betätigung der nicht dargestellten Arretiermittel, kann die Rückenlehnenstruktur 4b um ihre Schwenkachse nach vorne geklappt werden. Dem Bereich der Schwenkachse sind eine Rastscheibe 28 und eine Rastklinke 29 mit Bowdenzug 30 zugeordnet. Die Rastscheibe 28 ist dabei drehfest mit der Rückenlehnenstruktur 4b und die Rastklinke 29 an der ersten Tragstruktur 3 festgelegt. Die Rastklinke 29 ist als zweiseitiger Hebel ausgeführt und mittig um die Achse 31 schwenkbar gelagert. An einer Seite des Hebels ist eine Feder 32 vorgespannt gehalten, an der anderen Seite des Hebels ist endseitig eine Rastnase 33 ausgeformt, die bei einem Verschwenken der Rückenlehnenstruktur 4b hinter einem Rastnocken 34 der Rastscheibe 28 in einen Rasteingriff gelangt. In der in Figur 20 dargestellten Gebrauchseinstellung der Sitzanlage 1 e ist zu erkennen, dass die Rastnase 33 der Rastklinke 29 an der Rastscheibe 28 über die Feder vorgespannt anliegt. Des Weiteren ist aus der Figur ersichtlich, dass die Rastklinke 29 an einem Anbindungsohr einen Bowdenzug 30 als Betätigungselement aufweist. Der Bowdenzug 30 ist längs der Diagonalstrebe 13 geführt und steht mit einem schwenkbar an der vorderen Stützstrebe 11 gelagerten Verriegelungshebel 34 gekoppelt. Dieser Verriegelungshebel 37 verriegelt ein Drehfallenschloss 35, welches an der Trennwandeinrichtung 14 festgelegt ist und in Eingriff mit einem Schlossbügel 36 an der Stützstrebe 11 steht. In dieser Einstellung ist ein Entriegeln der Trennwandeinrichtung 14 an der Stützstruktur bzw. Tragstruktur 3 nicht möglich.

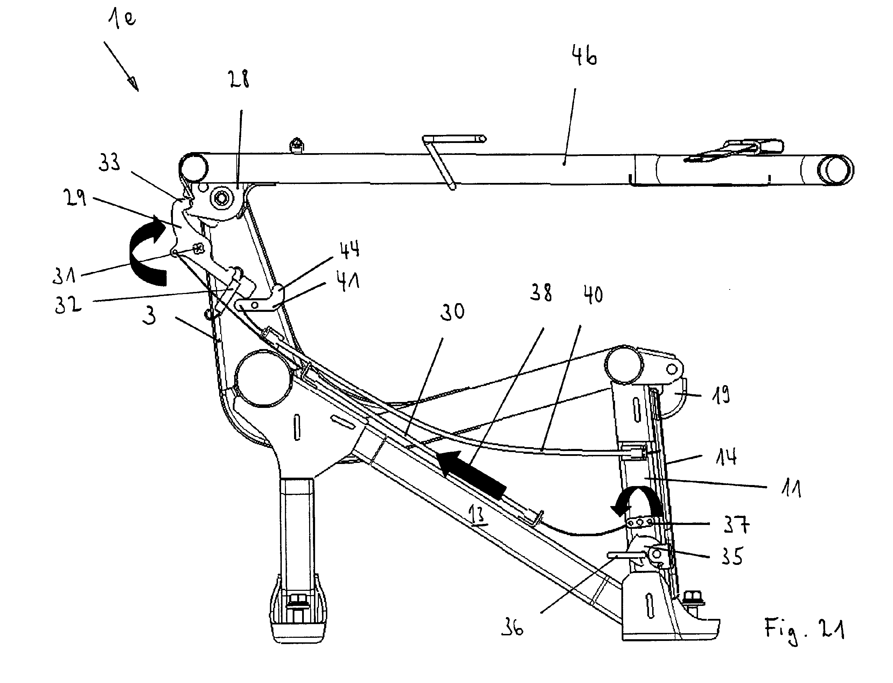

Wie zuvor bereits erörtert, dreht sich die Rastscheibe 28 bei einem Vorschwenken der Rückenlehnenstruktur 4b mit und die Rückenlehne wird, wie es in Figur 21 dargestellt ist, über die Rastnase 33 hinter dem Rastnocken 34 der Rastscheibe 28 in einer Rastvertiefung verrastet. Das Verdrehen der Rastscheibe 28 beim Vorschwenken der Rückenlehnenstruktur und Einrasten der Rastnase 33 hinter dem Rastnocken 34 bewirkt ein Verdrehen der Rastklinke 29 im Uhrzeigersinn. Hierdurch wird der Bowdenzug 30 in Richtung des Pfeils 38 betätigt und der Verriegelungshebel 37 in eine Entriegelungsposition geschwenkt. In dieser entriegelten Position kann nun ein Öffnen und Hochschwenken der Trennwandeinrichtung 14 in die Verstaueinstellung erfolgen.

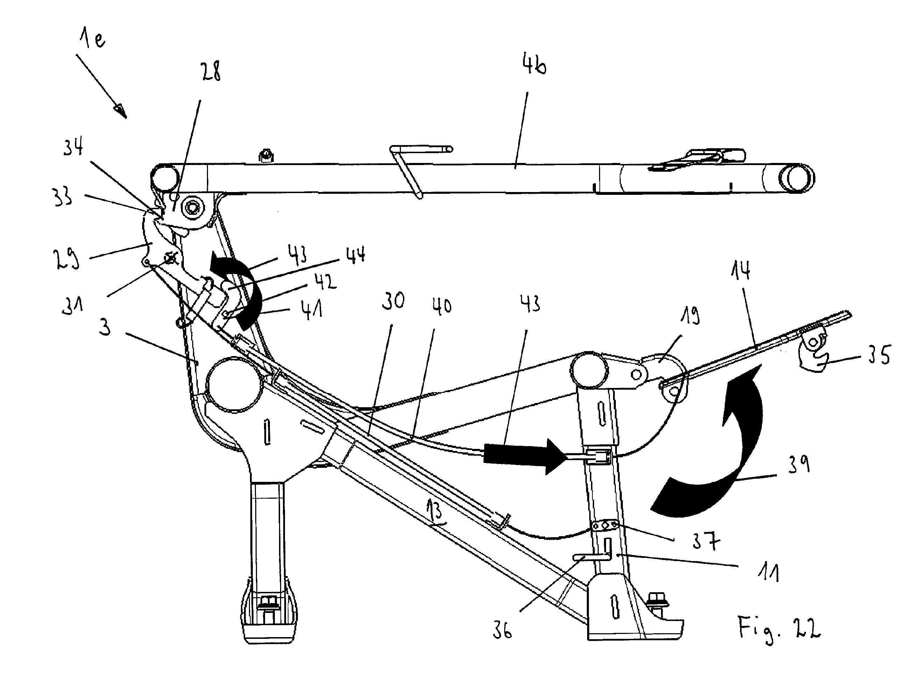

Aus der Figur 22 ist mit dem Pfeil 39 das Hochschwenken der Trennwandeinrichtung 14 dargestellt. Bei diesem Hochschwenken wird gleichzeitig über einen im oberen Bereich der Trennwandeinrichtung 14 angebundenen Bowdenzug 40 eine weitere Sperrklinke 41 betätigt. Diese Sperrklinke 41 ist im Bereich der Rastklinke 29 an der Tragstruktur 3 um eine Achse 42 verschwenkbar angeschlagen und verschwenkt über die Betätigung des Bowdenzugs 40 in Richtung des eingezeichneten Pfeils 43. Die Sperrklinke 41 verriegelt beim Verschwenken über einen Hebelarm 44 den der Rastnase 33 gegenüberliegenden Hebelarm der Rastklinke 29. In dieser verriegelten Position der Rastklinke 41 ist die Rückenlehnenstruktur 4b nicht mehr in die Gebrauchseinstellung verschwenkbar. Bei einem Zurückverschwenken der Trennwandeinrichtung 14 in die Gebrauchseinstellung wird die Sperrklinke 41 aufgrund einer Federvorspannung, die über eine an ihrer Lagerachse gehaltenen Schenkelfeder erreicht wird, selbsttätig in ihre Ausgangsstellung zurückschwenken. Ein Hochschwenken der Rückenlehnenstruktur ist nun über die weitere am oberen Bereich der Rückenlehne angeordnete Betätigungseinrichtung möglich. In hochgeschwenkter Position der Rückenlehnenstruktur ist das Drehfallenschloss 35 wieder über den Verriegelungshebel 37, der bei der Verschwenkbewegung wieder in seine Verriegelungsstellung verschwenkt, blockiert.

Bei dieser zuvor beschriebenen Ausführungsvarianten wird bei einem Hochschwenken der Trennwandeinrichtung 14 gleichzeitig durch die obenstehend zu den Figuren 1 bis 4 beschriebene Kopplung des Hebels 18 mit dem Hebelelement 19 und der weiteren Kopplung des Hebels 18 mit der Tragstruktur 5a des Sitzpolsters ein Verschwenken des Sitzpolsters mit Tragstruktur 5a bewirkt. Hierdurch ist auch der Sitzbereich, der neben der vorgeklappten Rückenlehne angeordnet ist nicht für den normalen Gebrauch nutzbar.

## Patentansprüche

1. Sitz (1) oder Sitzanlage (1a, 1b, 1c, 1d, 1e) für ein Kraftfahrzeug und insbesondere einen Lieferwagen, aufweisend eine fahrzeugfest anzubringende Tragstruktur (3), ein damit verbundenes Sitzpolsterteil (2a, 5a; 2b, 5b) und eine Trennwandeinrichtung (14), die verstellbar ist zwischen einer Gebrauchseinstellung, in der sie den Fußbereich (F) vor dem Sitz (1) von einem darunter vorhandenen Ladebereich (L) trennt, und einer Verstaueinstellung, in der ein Durchlass zwischen beiden Bereichen (F, L) frei bleibt, **dadurch gekennzeichnet, dass** Sicherungseinrichtungen ein Verbringen der Trennwandeinrichtung (14) in die Verstaueinstellung mit einem Aufrichten des Sitzpolsterteils (2a, 5a; 2b, 5b) an der Vorderkante und/oder einem Verschwenken der Rückenlehne in Richtung auf das Sitzpolsterteil und/oder einem Herausnehmen des Sitzpolsterteils aus der Tragstruktur (3) notwendig verbinden, um dadurch den typischen Gebrauch des Sitzes (1) wesentlich zu beeinträchtigen oder unmöglich zu machen.

2. Sitz (1) oder Sitzanlage nach Anspruch 1, wobei das Sitzpolsterteil (2a, 5a; 2b, 5b) um eine im Bereich des Übergangs zu einer Rückenlehnenstruktur (4a, 4b) liegende Achse (A) an der Tragstruktur (3) verschwenkbar angehängt ist.

3. Sitz (1) oder Sitzanlage nach Anspruch 2, wobei die Verbindung des Sitzpolsterteils (2a, 5a; 2b, 5b) zu der Tragstruktur (3) mehrgliedrig ausgeführt ist, um ein Aufschwenken des Sitzpolsters um seine vordere Kante zu ermöglichen.

4. Sitz (1) oder Sitzanlage nach einem der vorangehenden Ansprüche, wobei Rastoder Verriegelungsmittel (35, 36, 37) vorgesehen sind, um die Trennwandeinrichtung (14) in der ersten Einstellung in Längsrichtung des Sitzes (1) abzustützen und zu verriegeln, und wobei die Verriegelungsmittel (35, 36, 37) insbesondere ein Drehfallenschloss, einen Schlossbügel und einen Verriegelungshebel umfassen.

5. Sitz (1) oder Sitzanlage nach einem der vorangehenden Ansprüche, wobei die Trennwandeinrichtung (14) verschwenkbar und vorzugsweise im Bereich der Vorderkante an dem Sitzpolsterteil (2a, 5a; 2b, 5b) angeschlagen ist, um bei dessen Aufrichten nach oben verlagert zu werden.

6. Sitz (1) oder Sitzanlage nach Anspruch 5, wobei Ausrichtmittel vorgesehen sind, um die Bewegung der Trennwandeinrichtung (14) in Bezug auf eine Übereinstimmung der Rast- oder Verriegelungsmittel (35, 36, 37) mit den entsprechenden Anbindungsstellen an der Tragstruktur (3, 11) oder dem Fahrzeugkörper zu beeinflussen.

7. Sitz (1) oder Sitzanlage nach Anspruch 6, wobei die Ausrichtmittel eine zwischen der Trennwandeinrichtung (14) und der Tragstruktur (3) verlaufende gelenkig angeschlagene Stange umfassen.

8. Sitz (1) oder Sitzanlage nach Anspruch 6, wobei die Ausrichtmittel eine an der Tragstruktur (3) angeordnete Kulissenführung umfassen.

9. Sitz (1) oder Sitzanlage nach Anspruch 1, 2 oder 4, wobei die Trennwandeinrichtung (14) an der Tragstruktur (3) verschwenkbar angeschlagen ist.

10. Sitz (1) oder Sitzanlage nach Anspruch 9, wobei Koppelungsmittel (16, 18, 19) und insbesondere eine Zugstange (18) vorgesehen sind, um beim Verschwenken der Trennwandeinrichtung (14) in die Ladestellung das Sitzpolsterteil (3) aufzurichten.

11. Sitz oder Sitzanlage nach einem der vorangehenden Ansprüche, wobei die Rückenlehnenstruktur (4b) um eine im unteren Rückenlehnenbereich liegende Achse (10) an der Tragstruktur (3) verschwenkbar angehängt und in diesem Bereich über eine Rastscheiben / Rastklinkenanordnung (28, 29) in vorgeklappter Position verriegelbar ist.

12. Sitz oder Sitzanlage nach Anspruch 11, wobei die Rastklinke (29) bei einem Verschwenken der Rückenlehnenstruktur (4b) in die vorgeklappte Position über einen Bowdenzug (30) als Betätigungselement die der Trennwandeinrichtung (14) zugeordneten Rast- oder Verriegelungsmittel (35, 36) über ein Betätigen eines Verriegelungshebels (37) freigibt.

13. Sitz oder Sitzanlage nach Anspruch 12, wobei bei einem Hochschwenken der Trennwandeinrichtung (14) in die Verstaueinstellung über ein vorzugsweise als Bowdenzug ausgebildetes Betätigungselemtent (40) eine Sperrklinke (41) die Rastklinke (29) zusätzlich verriegelt, so dass ein Zurückverlagern der Rückenlehnenstruktur in die Gebrauchseinstellung unmöglich ist.

14. Sitzanlage nach einem der vorangehenden Ansprüche mit zwei Sitzbereichen 2a,2b), wobei ein erster Sitzbereich eine verschwenkbar an der Tragstruktur angeordnete Rückenlehnenstruktur (4b) umfasst und wobei beim vorklappen der Rückenlehnenstruktur (4b) in Richtung auf den ersten Sitzbereich (2b)eine Entriegelung der Trennwandeinrichtung (14) an der Tragstruktur (3) erfolgt und wobei die Sicherungseinrichtungen im Bereich der vorgeschwenkten Rückenlehnenstruktur (4b) Betätigungselemente insbesondere eine Bowdenzuganordnung (40) und eine Sperrklinke (41) umfassen, die beim hochschwenken der Trennwandeinrichtung (14) ein zusätzliches Verriegeln der Rückenlehnenstruktur (4b) in der vorgeklappten Position bewirken und wobei weiterhin Sicherungseinrichtungen vorgesehen sind, die den zweiten Sitzbereich (2a) über Koppelungsmittel, insbesondere eine Zugstange (18) sowie weitere Hebelelemente (16, 19) beim Verschwenken der Trennwandeinrichtung (14) in eine hochgeschwenkte Position verlagern.
